(19) Europäisches Patentamt
European Patent Office
Office européen des brevets

(11) **EP 3 215 727 B1**

(12) **FASCICULE DE BREVET EUROPEEN**

(45) Date de publication et mention
de la délivrance du brevet:
**08.07.2020 Bulletin 2020/28**

(21) Numéro de dépôt: **15797130.0**

(22) Date de dépôt: **27.10.2015**

(51) Int Cl.:
*F02D 11/10* (2006.01)   *F02D 33/02* (2006.01)
*F02D 41/18* (2006.01)   *F02D 41/10* (2006.01)
*F02D 41/12* (2006.01)   *F02D 41/14* (2006.01)

(86) Numéro de dépôt international:
**PCT/FR2015/052892**

(87) Numéro de publication internationale:
**WO 2016/071603 (12.05.2016 Gazette 2016/19)**

(54) **PROCÉDÉ D'ESTIMATION D'UNE POSITION D'UN PAPILLON D'ARRIVÉE DES GAZ POUR LE CONTRÔLE D'UN MOTEUR À COMBUSTION INTERNE**

VERFAHREN ZUR VORHERSAGE EINER GASEINLASSSEITIGEN DROSSELKLAPPE FÜR DIE STEUERUNG EINER BRENNKRAFTMASCHINE

METHOD OF ESTIMATION OF A INTAKE GAS THROTTLE POSITION FOR CONTROL OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2014 FR 1460609**

(43) Date de publication de la demande:
**13.09.2017 Bulletin 2017/37**

(73) Titulaire: **PSA Automobiles SA
78300 Poissy (FR)**

(72) Inventeur: **POULY, Clement
F-92700 Colombes (FR)**

(56) Documents cités:
**EP-A1- 1 217 191       GB-A- 2 333 159
US-A1- 2002 078 924    US-A1- 2006 047 406
US-A1- 2011 191 009    US-B1- 6 170 475**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention porte sur un procédé d'estimation d'une position d'un papillon d'arrivée des gaz pour le contrôle d'un moteur à combustion interne.

De façon connue en soi, pour assurer une bonne combustion dans les moteurs à essence à injection directe et indirecte, on commence à injecter le carburant durant la phase d'échappement du cylindre considéré. Pour connaître la quantité de carburant à injecter sur ce cylindre, il faut déterminer dès le début de cette phase d'échappement quelle sera la quantité d'air présente dans la chambre de combustion délimitée par le cylindre au moment de la fermeture de la soupape admission, c'est-à-dire la quantité d'air qui va participer à la combustion. On réalise donc pour chaque cylindre, durant la phase d'échappement et durant la phase d'admission, une prédiction de la masse d'air présente dans la chambre de combustion associée au cylindre au moment de la fermeture de la soupape admission.

Cette prédiction de la masse d'air peut être réalisée à partir d'un modèle standard d'estimation de la masse d'air dans le cylindre qu'on alimente avec une pression du répartiteur admission prédite au moment de la fermeture de la soupape admission.

Deux systèmes connus consistent à prédire la pression qui va régner dans le répartiteur admission à l'horizon temporel donné. Cette pression prédite va ensuite alimenter un modèle de débit de cylindre qui va fournir un débit prédit à l'horizon donné.

Un des systèmes de prédiction de pression se base sur l'analyse du gradient de la pression mesurée. On extrapole alors la valeur de pression qui règnera dans le répartiteur admission à l'horizon de la fermeture soupape admission en considérant ce gradient constant et en partant de la pression mesurée courante.

L'autre système se base sur l'utilisation d'un modèle du répartiteur d'admission modélisant les débits entrants (débits issus du papillon et du canister principalement) et sortant (débit dans le cylindre) courants. Ce modèle permet d'estimer la pression courante dans le répartiteur par l'intégration de l'écart entre ces débits. Pour la prédiction de pression, on reprend ce principe de calcul en intégrant l'écart entre ces débits à un horizon correspondant au moment de la fermeture de la soupape admission.

Les deux systèmes connus présentent la même limitation. Ils se basent principalement sur l'analyse des mesures courantes (de pression dans le premier système, et des positions actionneurs pour la modélisation des débits pour le deuxième système) et les extrapolent jusqu'à l'horizon demandé. Or, en tenant compte uniquement de ces mesures, ces systèmes prédisent la pression en considérant les phénomènes figés. L'évolution est donc supposée identique jusqu'à l'horizon visé, ce qui n'est pas forcément le cas tout au long d'un transitoire.

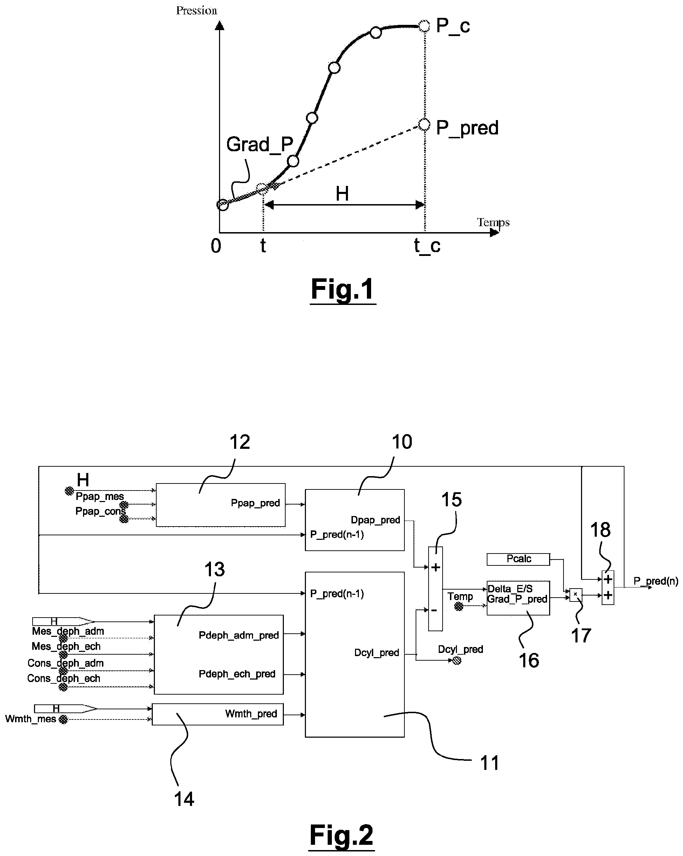

En effet, comme on peut le voir sur l'exemple de la figure 1, à l'instant de calcul t, le gradient de pression Grad_P est calculé à partir de la mesure de pression au point courant et au point précédent. Autrement dit, le gradient d'évolution est mesuré entre deux pas de calcul. La pression prédite P_pred est obtenue par extrapolation à l'horizon désiré du gradient calculé Grad_P. Sur cet exemple, on voit que l'évolution physique de la pression amène, au terme de l'horizon H, à une pression P_pred très différente de la pression cible P_c mesurable à l'instant cible t_c. Les deux systèmes connus ne sont donc pas très performants en termes de qualité de prédiction pour les horizons longs H et pour les variables présentant des évolutions non linéaires.

Le document US 2006/047406 A1 divulgue un procédé d'estimation d'une position d'un papillon d'arrivée des gaz pour le contrôle d'un moteur à combustion interne, avec prédiction, sur un horizon temporel de calcul donné, de la position du papillon en fonction de la position du papillon mesurée et d'un gradient de position entre une position courante et une position précédente.

L'invention propose un procédé d'estimation d'une position d'un papillon d'arrivée des gaz pour le contrôle d'un moteur à combustion interne, caractérisé en ce qu'il comporte les étapes suivantes :

- une étape de mesure d'une position du papillon d'arrivée des gaz,
- une étape de relevé d'une consigne de position du papillon d'arrivée des gaz et
- une étape de prédiction, sur un horizon temporel de calcul donné, de la position du papillon d'arrivée des gaz en fonction de la position du papillon mesurée et d'un gradient de position entre une position courante et une position précédente, le calcul du gradient de position étant choisi entre :

  - la mise en œuvre d'une première stratégie de calcul basée sur un calcul du gradient de la consigne de position du papillon d'arrivée des gaz,
  - la mise en œuvre d'une deuxième stratégie de calcul basée sur un calcul du gradient de la mesure de la position du papillon d'arrivée des gaz, et
  - la mise en œuvre d'une combinaison de la première et de la deuxième stratégie de calcul précitées, le choix étant fonction de la comparaison de la valeur de l'horizon de calcul donné à au moins un paramètre physique du papillon d'arrivée des gaz.

Le procédé selon l'invention qui utilise des informations de consigne, des mesures, et les paramètres physiques du comportement du papillon permet d'obtenir un signal de la position du papillon prédit plus précis et réactif (notamment en début de transitoire) que la méthode de prédiction selon l'état de l'art.

De préférence, le choix entre les différentes mises en œuvre de stratégies de calcul ou de combinaison des stratégies de calcul est effectué en comparant une valeur de l'horizon temporel de calcul donné par rapport à un paramètre physique consistant en une dynamique connue de déplacement dudit papillon d'arrivée des gaz.

Selon une mise en œuvre, ledit procédé comporte une étape de saturation du gradient calculé de la position du papillon basée sur au moins un paramètre physique du papillon d'arrivée des gaz.

Selon une mise en œuvre, ledit procédé comporte en outre une étape de saturation de la prédiction de position du papillon d'arrivée des gaz.

Selon une mise en œuvre, l'étape de saturation de la position du papillon d'arrivé des gaz prédite est réalisée de telle façon qu'en phase d'ouverture du papillon d'arrivée des gaz, la position prédite ne peut pas être supérieure à une consigne du papillon, et en phase de fermeture papillon, la position prédite ne peut pas être inférieure à la consigne du papillon.

Selon une mise en œuvre, ledit procédé comporte une étape de filtrage de la position du papillon prédite.

Selon une mise en œuvre, ledit procédé comporte une étape d'application d'un filtre du premier ordre. Cela permet de lisser les variations brusques du gradient de pression.

L'invention concerne aussi un module de calcul électronique selon la revendication 8.

L'invention concerne aussi un moteur à combustion interne selon la revendication 9.

L'invention concerne aussi un véhicule équipé d'un tel moteur à combustion interne.

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, est un graphique illustrant la prédiction de pression dans le répartiteur d'admission suivant un procédé selon l'état de la technique au cours d'une évolution transitoire de pression;

La figure 2 est un schéma fonctionnel du procédé selon l'invention illustrant la réalisation d'un bilan des débits entrants/sortants du répartiteur d'admission en vue d'estimer le débit de gaz dans le cylindre;

La figure 3 est un schéma fonctionnel du procédé selon l'invention illustrant le calcul de la prédiction de la position du papillon d'arrivée des gaz;

Les figures 4a et 4b sont des graphiques illustrant la prédiction de la position du papillon respectivement dans le cas d'un transitoire long et d'un transitoire court;

Les figures 5a et 5b sont des graphiques illustrant les deux étapes permettant d'estimer la pression à l'intérieur du répartiteur d'admission ainsi que le débit correspondant des gaz dans le cylindre.

La figure 6 est un schéma fonctionnel illustrant l'utilisation du débit dans le cylindre pour déterminer les consignes de commande des injecteurs.

Les éléments identiques, similaires, ou analogues conservent la même référence d'une figure à l'autre.

La figure 2 illustre de manière schématique la modélisation du bilan du répartiteur d'admission dans le cadre de son application au calcul d'un débit de gaz prédit dans le cylindre Dcyl_pred.

Le procédé de l'invention décrit ensuite est avantageusement mis en œuvre dans un moteur à combustion interne équipant par exemple un véhicule, par un module de commande électronique, tel qu'un calculateur électronique. Ce module de commande électronique comprend les moyens d'acquisition, de traitement par instructions logicielles stockées dans une mémoire ainsi que les moyens de commande requis à mise en œuvre du procédé de l'invention.

Cette modélisation est basée notamment sur l'utilisation d'un module prédicteur de débits entrants 10 correspondant ici au débit papillon prédit Dpap_pred à l'horizon temporel H considéré et d'un module prédicteur de débits sortants 11 correspondant au débit dans le cylindre prédit Dcyl_pred à l'horizon de calcul H considéré.

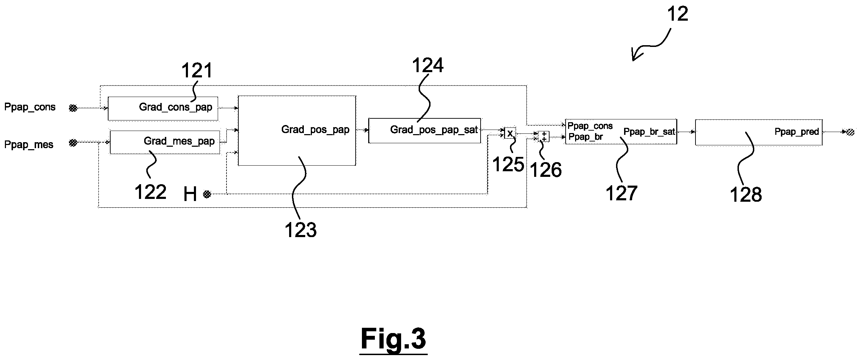

Le module prédicteur de débit entrant 10 est alimenté par un module 12 de prédiction de la position du papillon d'arrivée des gaz Ppap_pred. Comme cela est illustré sur la figure 3, la prédiction de la position angulaire du papillon Ppap_pred à un horizon donné H se base essentiellement sur l'observation du gradient de position Grad_pos_pap entre la position courante et celle du pas précédent. Ce gradient Grad_pos_pap pourra le cas échéant être saturé par le module 124 comme expliqué ci-après. La formule relative à l'évolution de la prédiction de la position du papillon Ppap_pred est :

$$Ppap\_pred(n) = P\_pap\_mes(n) + Grad\_pos\_pap* H$$

Plus précisément, le calcul du gradient de position Grad_pos_pap est décomposé en deux stratégies de calcul. La première stratégie de calcul mise en œuvre par le module 121 est basée sur le calcul du gradient de la consigne de position du papillon Grad_cons_pap consistant à calculer l'écart entre deux positions successives de la position du papillon de consigne Ppap_cons, Ppap_cons étant une donnée d'entrée relevé par le module 12. La deuxième stratégie de calcul mise en œuvre par le module 122 est basée sur le calcul du gradient de la mesure de position du papillon Grad_mes_pap consistant à calculer l'écart entre deux positions successives de la position du papillon mesurée Ppap_mes. Le choix du gradient de la position du papillon Grad_pos_pap est effectué par le module 123 en fonction de la valeur de l'horizon temporel H.

La première stratégie de calcul est ainsi sélectionnée pour les horizons temporels H relativement longs, à faible régime par exemple. En effet, on considère que dans ce cas, l'actionneur aura eu le temps d'atteindre sa position de consigne et donc la position du papillon prédite Ppap_pred sera plus proche de la consigne que de la mesure actuelle. Par contre, pour les horizons temporels courts H à fort régime par exemple, la deuxième stratégie de calcul est sélectionnée. En effet, dans ce cas, la position prédite Ppap_pred sera plus proche de la position mesurée actuelle que de la consigne.

Il est à noter qu'il est également prévu de choisir la mise en œuvre d'une combinaison des deux stratégies de calcul précitées. Par exemple, on peut sélectionner la première stratégie de calcul pour le régime minimum (au ralenti, à 700tr/min) et la deuxième stratégie de calcul pour le régime maximal (6000tr/min par exemple), et pour un régime médian (3000tr/min), il est possible de choisir une combinaison de type 50% de la valeur de la première stratégie ajoutée à 50% de la valeur de la deuxième stratégie.

En outre, le choix de la stratégie de calcul ne dépend pas uniquement du régime. Ainsi, dans la pratique, on met en œuvre le procédé sur trois horizons différents. A un même régime, pour chacun des trois horizons, on ne va pas nécessairement choisir la même stratégie de calcul ou combinaison des deux stratégies. Le choix est effectué en comparant la valeur de l'horizon H exprimé en secondes (prise en compte du régime et de la valeur angulaire de l'horizon) par rapport à au moins un paramètre physique du papillon d'arrivée des gaz tel que de préférence la dynamique connue de déplacement du papillon d'arrivée des gaz.

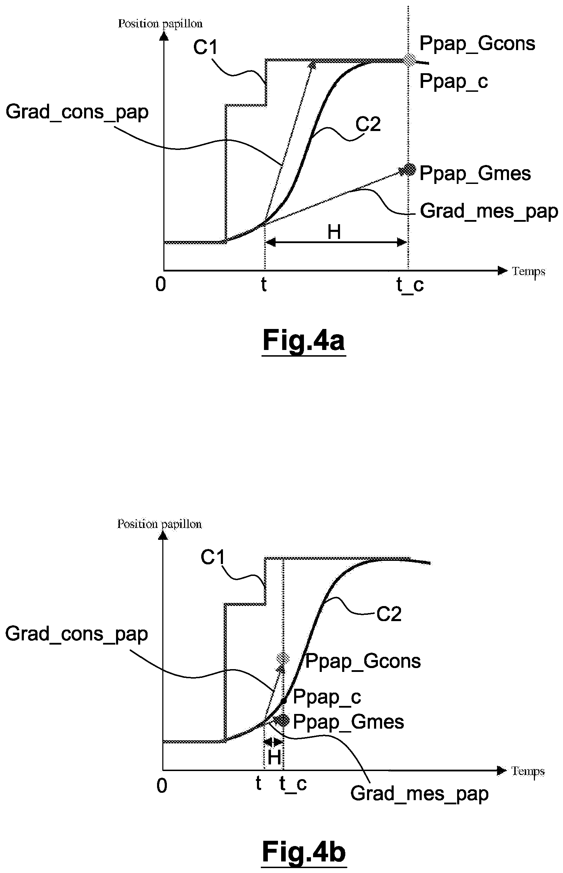

Sur les figures 4a et 4b, on a représenté par la courbe C1 l'évolution de la consigne de la position du papillon en fonction du temps. Par ailleurs, la courbe C2 représente l'évolution de la mesure de la position du papillon. Le point Ppap_Gcons correspond à la position prédite à l'horizon H donné à partir du gradient de consigne Grad_cons_pap. Le point Ppap_Gmes correspond à la position prédite à l'horizon H donné à partir du gradient Grad_mes_pap mesuré entre la position mesuré à l'instant t de calcul et la valeur précédente.

Dans l'exemple d'un horizon H long illustré à la figure 4a, à l'instant de calcul t, il ressort que l'utilisation du gradient de consigne Grad_cons_pap (et la saturation par la consigne du papillon) permet de réaliser une prédiction de position Ppap_Gcons plus proche de la position cible Ppap_c que l'on aura à l'instant visé t_c que le calcul utilisant le gradient mesuré Grad_mes_pap.

Dans l'exemple d'un horizon H court illustré à la figure 4b, à l'instant de calcul t, on voit que l'utilisation du gradient mesuré Grad_mes_pap permet de réaliser une prédiction de position plus proche de la position Ppap_c que l'on aura à l'instant visé t_c que le calcul utilisant le gradient de consigne Grad_cons_pap.

Une fois le gradient adapté sélectionné, le module 124 assure une saturation du gradient de la position du papillon Grad_pos_pap. Cela permet de sécuriser le gradient de la position du papillon par une limitation d'évolution. Ces saturations sont basées sur des paramètres physiques du papillon d'arrivée des gaz, tels que ses vitesses maximales de déplacement en ouverture et en fermeture.

La prédiction brute de la position du papillon Ppap_br est ensuite calculée à partir de la position du papillon mesuré Ppap_mes, du gradient de position saturé Grad_pos_pap_sat et de l'horizon de prédiction H. Les modules 125 et 126 assurent la combinaison de ces données suivant la formule précitée.

La saturation de la prédiction brute de la position du papillon Ppap_br est ensuite réalisée par le module 127 en fonction de deux cas pour obtenir Ppap_br_sat. Dans le premier cas correspondant à une phase d'ouverture du papillon, la position prédite Ppap_pred ne peut pas être supérieure à la consigne de position du papillon. Dans le second cas correspondant à une phase de fermeture du papillon, la position prédite Ppap_pred ne peut pas être inférieure à la consigne de position du papillon.

On finalise ensuite le calcul par un filtrage de la prédiction brute de position du papillon Ppap_br_sat. A cet effet, un module 128 pourra par exemple appliquer un filtre du premier ordre pour lisser les variations brusques du gradient de pression.

Ce principe de calcul utilisant les informations de consigne Ppap_cons, de mesure Pap_mes, et les paramètres physiques de comportement du papillon, permet d'obtenir un signal de position du papillon prédit beaucoup plus réactif (notamment en début de transitoire) et plus précis que les techniques de l'état de l'art.

Par ailleurs, comme on peut le voir sur la figure 2, le module 11 prédicteur de débits sortants est alimenté par un module 13 prédicteur de position angulaire des déphaseurs d'arbre à came Pdeph_adm_pred, Pdeph_ech_pred et un module 14 prédicteur de régime moteur Wmth_pred.

Plus précisément, le module 13 estime la position angulaire du déphaseur d'arbre à cames à l'admission Pdeph_adm_pred ainsi que la position angulaire du déphaseur d'arbre à cames à l'échappement Pdeph_ech_pred. Ces estimations sont effectuées en fonction de mesures des positions angulaires des déphaseurs d'arbre à cames à l'admission Mes_deph_adm et à l'échappement Mes_deph_ech et de consignes des positions angulaires des déphaseurs d'arbre à cames à l'admission Cons_deph_adm et à l'échappement Cons_deph_ech, ainsi que de l'horizon de prédiction H.

Par ailleurs, le module 14 estime le régime moteur Wmth_pred en fonction d'une mesure de régime moteur Wmth_mes et de l'horizon de prédiction H.

La réalisation d'un bilan des débits entrants et sortants du répartiteur admission permet de déterminer la pression P_pred qui règne dans le répartiteur d'admission. Le principe de base de ce bilan est qu'en régime stabilisé, la loi physique de conservation des masses appliquée au répartiteur admission fait que le bilan entre ses débits entrants et sortants est nul et que donc la pression est stable.

A cet effet, le module 15 calcule l'écart Delta_E/S entre ces débits Dpap_pred et Dcyl_pred. Le module 16 transforme alors cet écart Delta_E/S en gradient de pression Grad_P_pred en tenant compte de la température Temp.

Ce gradient Grad_P_pred permet, à partir du pas de calcul Pcalc de la fonction, et de la valeur précédente de pression prédite Ppred(n-1), de calculer, via les modules 17, 18, une nouvelle valeur de pression prédite Ppred(n). La formule d'évolution est la suivante: P_pred(n) = P_pred(n-1) + Grad_P_pred * Pcalc

Cette valeur de pression prédite P_pred(n) est ensuite renvoyée vers les modules prédicteurs de débits 10 et 11. Les débits sont ainsi mis à jour et le calcul continue jusqu'à trouver une équilibre, c'est-à-dire lorsque la différence entre les débits entrants et sortants devient nul.

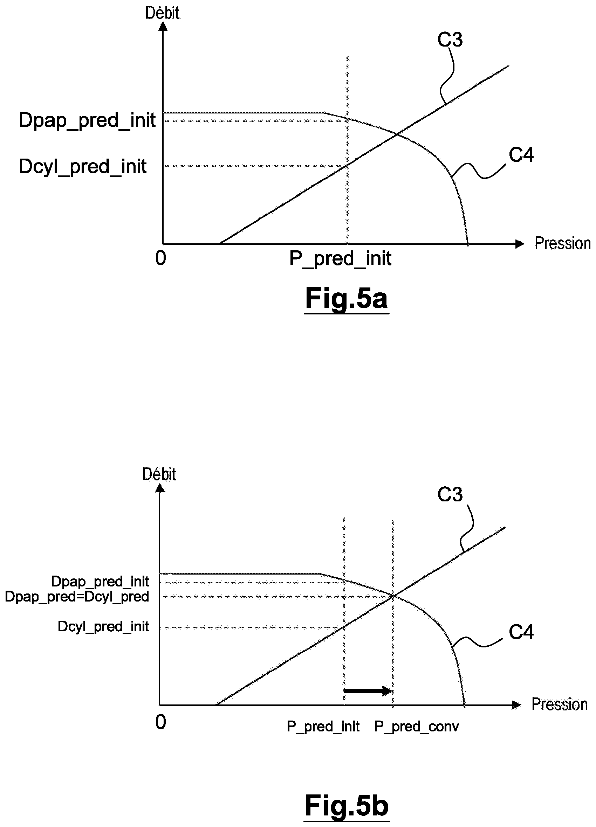

Comme cela est illustré sur la figure 5a, au pas d'initialisation, les estimations de débit papillon Dpap_pred_init et de débit dans le cylindre Dcyl_pred_init réalisés à partir de la pression prédite initiale P_pred_init sont assez différents. La différence des débits Delta_E/S est intégrée pour calculer une évolution de la pression prédite P_pred. Cette nouvelle pression P_pred est renvoyée vers les modules prédicteurs de débits 10, 11. Il est à noter que sur les figures 5a et 5b, la droite C3 correspond à la caractéristique de débit du cylindre (la droite de remplissage), tandis que la courbe C4 correspond à la caractéristique de débit du papillon à pression constante.

Comme cela est illustré sur la figure 5b, en intégrant progressivement l'écart entre les débits prédits papillon Dpap_pred et cylindre Dcyl_pred, la pression prédite converge jusqu'à une valeur stable P_pred_conv, déterminant l'équilibre des débits prédits. A cet instant, on obtient une estimation de la prédiction du débit dans le cylindre Dcyl_pred à l'horizon considéré H.

La prédiction de débit cylindre Dcyl_pred au moment de la fermeture soupape admission du cylindre considéré est calculé durant toute la phase d'échappement et poursuivit pendant la phase d'admission.

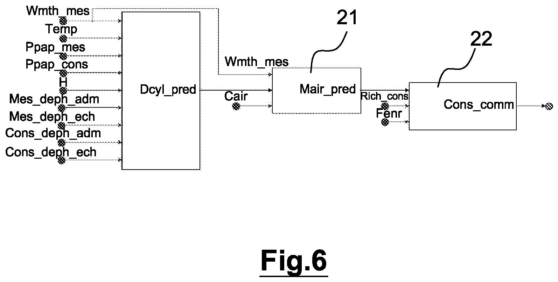

Comme cela est illustré sur la figure 6, le débit cylindre prédit Dcyl_pred est transformé, par le module 21, en masse d'air prédite Mair_pred. A cet effet, le module 21 tient compte du régime moteur Wmth_mes, ainsi que de la concentration en air dans le répartiteur d'admission Cair.

Cette masse d'air prédite Mair_pred est ensuite convertie en masse de carburant de consigne, ce qui sert à calculer et à commander le temps d'ouverture des injecteurs. Le module 22 établit ainsi des consignes de commande Cons_comm en fonction de la masse d'air prédite Mair_pred et également de la richesse de consigne Rich_cons et du facteur d'enrichissement Fenr.

Ainsi, le débit cylindre prédit Dcyl_pred étant calculé à partir du modèle de débit cylindre alimenté par des paramètres principaux prédits (pressions répartiteur admission prédites P_pred, positions des déphaseurs arbres à cames prédits et régime moteur prédit Wmth_pred), l'invention permet d'améliorer la finesse de prédiction de débit cylindre Dcyl_pred.

En outre, la justesse de la prédiction de pression P_pred est sensiblement améliorée par l'utilisation des modèles de prédiction des positions des actionneurs (papillon, déphaseurs arbres à cames admission et échappement) et du régime Wmth à l'horizon donné. En effet, l'horizon de prédiction H est directement intégré dans les modèles de position des actionneurs qui servent à réaliser le bilan du répartiteur d'admission.

Ces modèles s'avèrent robustes en termes de prédiction, dans la mesure où ils peuvent prédire plus précisément le comportement des actionneurs en se basant sur:

- la connaissance de la physique des actionneurs, de la prise en compte de leurs paramètres physiques (vitesse d'ouverture par exemple),
- l'analyse des gradients d'évolution courants (gradient de la position du papillon mesurée par exemple), ainsi que
- l'analyse de la commande qui leur est appliquée (gradient de la position du papillon de consigne par exemple).

On obtient ainsi une prédiction de pression plus juste qu'une simple extrapolation à l'horizon donné d'un gradient de pression considéré comme constant.

**Revendications**

1. Procédé d'estimation d'une position d'un papillon d'arrivée des gaz pour le contrôle d'un moteur à combustion interne, **caractérisé en ce qu'**il comporte les étapes suivantes:

   - une étape de mesure d'une position du papillon d'arrivée des gaz (Ppap_mes),
   - une étape de relevé d'une consigne de position du papillon d'arrivée des gaz (Ppap_cons) et
   - une étape de prédiction, sur un horizon temporel de calcul donné (H), de la position du papillon d'arrivée des gaz (Ppap_pred) en fonction de la position du papillon mesurée (Ppap_mes) et d'un gradient de position (Grad_pos_pap) entre une position courante et une position précédente, le calcul du gradient de position (Grad_pos_pap) étant choisi entre :
   - la mise en œuvre d'une première stratégie de calcul basée sur un calcul du gradient de la consigne de position du papillon d'arrivée des gaz (Grad_cons_pap),
   - la mise en œuvre d'une deuxième stratégie de calcul basée sur un calcul du gradient de la mesure de la position du papillon d'arrivée des gaz (Grad_mes_pap), et
   - la mise en œuvre d'une combinaison de la première et de la deuxième stratégie de calcul précitées,
   le choix étant fonction de la comparaison de la valeur de l'horizon de calcul donné (H) à au moins un paramètre physique du papillon d'arrivée des gaz.

2. Procédé selon la revendication 1, **caractérisé en ce que** le choix entre les différentes mises en œuvre de stratégies de calcul ou de combinaison des stratégies de calcul est effectué en comparant une valeur de l'horizon temporel de calcul donné (H) par rapport à un paramètre physique consistant en une dynamique connue de déplacement dudit papillon d'arrivée des gaz.

3. Procédé selon l'une quelconque des revendications 1 à 2, **caractérisé en ce qu'**il comporte une étape de saturation du gradient calculé de la position du papillon (Grad_pos_pap) basée sur au moins un paramètre physique du papillon d'arrivée des gaz.

4. Procédé selon l'une quelconque des revendications 1 à 3, **caractérisé en ce qu'**il comporte en outre une étape de saturation de la prédiction de position du papillon d'arrivée des gaz (Ppap_pred).

5. Procédé selon la revendication 4, **caractérisé en ce que** l'étape de saturation de la position du papillon d'arrivé des gaz prédite (Ppap_pred) est réalisée de telle façon qu'en phase d'ouverture du papillon d'arrivée des gaz, la position prédite (Ppap_pred) ne peut pas être supérieure à une consigne du papillon, et en phase de fermeture papillon, la position prédite (Ppap_pred) ne peut pas être inférieure à la consigne du papillon.

6. Procédé selon l'une quelconque des revendications 1 à 5, **caractérisé en ce qu'**il comporte une étape de filtrage de la position du papillon prédite (Ppap_pred).

7. Procédé selon la revendication 6, **caractérisé en ce qu'**il comporte une étape d'application d'un filtre du premier ordre.

8. Module de calcul électronique comprenant des moyens d'acquisition pour recevoir au moins une mesure d'une position du papillon d'arrivée des gaz d'un moteur à combustion interne, de traitement par instructions logicielles stockées dans une mémoire ainsi que des moyens de commande **caractérisé en ce que** ces moyens sont agencés pour la mise en œuvre de toutes les étapes du procédé selon l'une quelconque des revendications précédentes.

9. Moteur à combustion interne comprenant un papillon d'arrivée des gaz et étant **caractérisé en ce qu'**il comprend un module de calcul électronique selon la revendication 8.

10. Véhicule équipé d'un moteur à combustion interne selon la revendication 9.

**Patentansprüche**

1. Verfahren zum Schätzen einer Position einer Drosselklappe zum Steuern eines Verbrennungsmotors, das **dadurch gekennzeichnet ist, dass** es die folgenden Schritte umfasst:

   - ein Schritt zum Messen einer Position der Drosselklappe (Ppap_mes),
   - ein Schritt zum Lesen einer Positionsanweisung der Drosselklappe (Ppap_cons) und
   - ein Schritt der Vorhersage der Position der Drosselklappe (Ppap_pred) über einen gegebenen Berechnungszeithorizont (H) als Funktion der Position der gemessenen Drosselklappe (Ppap_mes) und eines Positionsgradienten (Grad_pos_pap) zwischen a aktuelle Position und eine vorherige Position, wobei die Berechnung des Positionsgradienten (Grad_pos_pap) gewählt wird zwischen :
   - die Implementierung einer ersten Berechnungsstrategie basierend auf einer Berechnung des Gradienten des Positionssollwerts der Drosselklappe (Grad_cons_pap),
   - die Umsetzung einer zweiten Berechnungsstrategie auf der Grundlage einer Berechnung des Gradienten der Messung der Position der Drosselklappe (Grad_mes_pap) und
   - die Umsetzung einer Kombination aus der ersten und der zweiten oben genannten Berechnungsstrategie,

   die Wahl ist eine Funktion des Vergleichs des Wertes des gegebenen Berechnungshorizonts (H) mit mindestens einem physikalischen Parameter der Drosselklappe.

2. Verfahren nach Anspruch 1, **dadurch gekennzeichnet, dass** die Wahl zwischen den verschiedenen Implementierungen von Berechnungsstrategien oder der Kombination der Berechnungsstrategien durch Vergleichen eines Wertes des gegebenen Berechnungszeithorizonts (H) in Bezug auf einen physikalischen Parameter, der aus a besteht, durchgeführt wird bekannte Bewegungsdynamik der Drosselklappe.

3. Verfahren nach einem der Ansprüche 1 bis 2, **dadurch gekennzeichnet, dass** es einen Sättigungsschritt des berechneten Gradienten der Position der Drosselklappe (Grad_pos_pap) basierend auf mindestens einem physikalischen Parameter der Drosselklappe umfasst.

4. Verfahren nach einem der Ansprüche 1 bis 3, **gekennzeichnet dadurch, dass** es ferner einen Schritt des Sättigens der Vorhersage der Position der Drosselklappe (Ppap_pred) umfasst.

5. Verfahren nach Anspruch 4, **dadurch gekennzeichnet, dass** der Schritt der Sättigung der vorhergesagten Position der Drosselklappe (Ppap_pred) derart ausgeführt wird, dass in der Öffnungsphase der Drosselklappe die vorhergesagte Position (Ppap_pred) nicht größer sein kann als ein Drosselsollwert und in der Drosselklappenschließphase kann die vorhergesagte Position (Ppap_pred) nicht kleiner als der Drosselsollwert sein.

6. Verfahren nach einem der Ansprüche 1 bis 5, **gekennzeichnet dadurch, dass** es einen Schritt des Filterns der Position der vorhergesagten Position der Drosselklappe (Ppap_pred) umfasst.

7. Verfahren nach Anspruch 6, **dadurch gekennzeichnet, dass** es einen Schritt des Aufbringens eines Filters erster Ordnung umfasst.

8. Elektronisches Berechnungsmodul, umfassend Erfassungsmittel zum Empfangen mindestens einer Messung einer Position der Drosselklappe eines Verbrennungsmotors, von Verarbeitungsmitteln durch in einem Speicher gespeicherte Softwareanweisungen sowie Steuermittel, die **dadurch gekennzeichnet sind, dass** diese Mittel für die Implementierung angeordnet sind aller Schritte des Verfahrens gemäß einem der vorhergehenden Ansprüche.

9. Verbrennungsmotor, der eine Drosselklappe umfasst und **dadurch gekennzeichnet ist, dass** er ein elektronisches Berechnungsmodul nach Anspruch 8 umfasst.

10. Fahrzeug mit Verbrennungsmotor nach Anspruch 9.

**Claims**

1. Method for estimating a position of a throttle valve for controlling an internal combustion engine, **characterized in that** it comprises the following steps :

- a step of measuring a position of the throttle valve (Ppap_mes),

- a step of reading a position instruction of the throttle valve (Ppap_cons) and

- a step of prediction, over a given calculation time horizon (H), of the position of the throttle valve (Ppap_pred) as a function of the position of the throttle valve measured (Ppap_mes) and of a position gradient (Grad_pos_pap) between a current position and a previous position, the calculation of the position gradient (Grad_pos_pap) being chosen between :

- the implementation of a first calculation strategy based on a calculation of the gradient of the position setpoint of the throttle valve (Grad_cons_pap),

- the implementation of a second calculation strategy based on a calculation of the gradient of the measurement of the position of the throttle valve (Grad_mes_pap), and

- the implementation of a combination of the first and second abovementioned calculation strategy,

the choice being a function of the comparison of the value of the given calculation horizon (H) with at least one physical parameter of the throttle valve.

2. Method according to claim 1, **characterized in that** the choice between the different implementations of calculation strategies or of combination of the calculation strategies is carried out by comparing a value of the given calculation time horizon (H) with respect to a physical parameter consisting of a known dynamic of movement of said throttle valve.

3. Method according to any one of claims 1 to 2, **characterized in that** it comprises a step of saturation of the calculated gradient of the position of the throttle valve (Grad_pos_pap) based on at least one physical parameter of the throttle valve.

4. Method according to any one of claims 1 to 3, **characterized in that** it further comprises a step of saturating the prediction of the position of the throttle valve (Ppap_pred).

5. Method according to claim 4, **characterized in that** the step of saturating of the predicted position of the throttle valve (Ppap_pred) is carried out in such a way that in the opening phase of the throttle valve, the predicted position (Ppap_pred) cannot be greater than a throttle setpoint, and in the throttle closing phase, the predicted position (Ppap_pred) cannot be less than the throttle setpoint.

6. Method according to any one of claims 1 to 5, **characterized in that** it comprises a step of filtering the position of the predicted position of the throttle valve (Ppap_pred).

7. Method according to claim 6, **characterized in that** it comprises a step of applying a first order filter.

8. Electronic calculation module comprising acquisition means for receiving at least one measurement of a position of the throttle valve of an internal combustion engine, of processing means by software instructions stored in a memory as well as control means **characterized in that** these means are arranged for the implementation of all the steps of the method according to any one of the preceding claims.

9. Internal combustion engine comprising a throttle valve and being **characterized in that** it comprises an electronic calculation module according to claim 8.

10. Vehicle equipped with an internal combustion engine according to claim 9.

**Fig.1**

**Fig.2**

12

121 124

Ppap_cons —→ | Grad_cons_pap | → | Grad_pos_pap | → | Grad_pos_pap_sat | →[x]→[+]→ | Ppap_cons Ppap_br | Ppap_br_sat | → | Ppap_pred | →

Ppap_mes —→ | Grad_mes_pap |

125 126

122 H

123 127 128

**<u>Fig.3</u>**

**Fig.4a**

**Fig.4b**

**Fig.5a**

**Fig.5b**

**Fig.6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006047406 A1